# EUROPEAN PATENT SPECIFICATION

(11) **EP 2 739 947 B1**
(45) Date of publication and mention of the grant of the patent: **26.07.2017**
(21) Application number: 12754121.7
(22) Date of filing: 02.08.2012
(51) Int. Cl.: G01F 25/00, G01D 9/12

(54) **METHODS AND APPARATUS FOR LEVEL LOOP CONTROL**
VERFAHREN UND GERÄTE ZUR FÜLLSTANDSREGELUNG
PROCÉDÉS ET APPAREILS POUR LE RÉGLAGE DU NIVEAU D'UN LIQUIDE

(30) Priority: 05.08.2011 US 201161515687 P
(43) Date of publication of application: 11.06.2014
(73) Proprietor: Fisher Controls International LLC, Marshalltown, IA 50158 (US)
(72) Inventor: PESEK, Thomas, Ankeny, IA 50021 (US); BURLAGE, Brian, Marshalltown, IA 50158 (US)
(74) Representative: Foot, Paul Matthew James
(86) International application number: PCT/US2012/049313
(87) International publication number: WO 2013/022695

(56) References cited:
- JP-A- 8 075 508
- JP-A- 60 159 916
- US-A- 4 530 463

## Description

### FIELD OF DISCLOSURE

The present disclosure relates generally to control systems and, more particularly, to methods and apparatus for level loop control.

### BACKGROUND

Natural gas well sites (e.g., non-associated well sites) commonly include a separator to separate natural gas from liquids. These liquids can include, for example, water, oil, and mud. A separator enables mined natural gas to be separated from liquids and/or water vapor by facilitating the liquids and/or water vapor and the gas to collect in respective collection chambers within the separator. Liquids in a liquid collection chamber are piped to liquid storage tanks to later separate oil from mud and water. Gases in a gas collection tank are commonly piped to natural gas processing stations or, alternatively, to natural gas collection tanks.

A liquid level in a liquid collection tank of a separator usually has to be maintained between a low threshold level and a high threshold level. If the liquid level falls below a low threshold level, natural gas may enter a liquid storage tank and possibly be vented to the atmosphere, which can be a potentially hazardous event. If the liquid level exceeds a high threshold level, the liquid may enter natural gas piping and cause blockage and/or cracking in the piping.

US4530463 discloses a liquid sprayer having a tank for storing liquid, a boom supporting spraying nozzles, and a pump and liquid control system for supply liquid under pressure to the spraying nozzles in a manner that maintains substantially uniform liquid dispensing density independent of the ground speed of the sprayer. A ground speed sensor, a liquid pressure sensor, and a liquid flow meter send signals to a controller to regulate a valve that controls the rate of flow of liquid to the spray nozzles.

JPH8075508 discloses a conventient flowmeter configured to detect deterioration of pump performance while measuring the flow rate by comparing a flow rate determined based on the water level on the suction side and the delivery pressure with a flow rate determined based on the water levels on the suction side and delivery side.

JPS60159916 discloses a liquid level controlling system configured to reduce the variation of an extracted flow rate by smoothing an inflow flow rate by introducing moving average arithmetic, and suppressing the variation of the extracted flow rate to the minimum.

### SUMMARY

Example methods and apparatus for determining an operational state of a turbine flow meter in a liquid level loop control are described. An example method includes determining via a sensor a first pressure of a liquid in a tank and determining via a turbine flow meter a second pressure of the liquid in the tank. Correlation information is used to convert a liquid flow rate through the turbine flow meter to the second pressure. The example method also includes determining if the first pressure is within a specified range of deviation from the second pressure to determine an operational state of the turbine flow meter and, based on the determined operational state, transmitting a diagnostic message indicating that the turbine flow meter needs to be serviced based on the state of the turbine flow meter.

A disclosed example apparatus includes a comparator to determine if a first pressure output corresponding to a volume of liquid in a tank is within a specified range of deviation from a second pressure output corresponding to the volume of liquid in the tank to determine an operational state of a turbine flow meter, the first pressure output being transmitted from a pressure sensor in the tank and the second pressure output corresponding to an output from the turbine flow meter. The apparatus further includes an interface to transmit a diagnostic message indicating the turbine flow meter needs to be serviced based on the operational state of the turbine flow meter.

### BRIEF DESCRIPTION OF THE DRAWINGS

FIG. 1 is a diagram of an example natural gas well site including an example dump valve and an example controller.
FIG. 2 is a diagram of an electric actuator of the example dump valve of FIG. 1.
FIG. 3 shows the example natural gas well site of FIG. 1 with the example dump valve including a contact switch.
FIG. 4 shows a diagram of an example liquid level processor operating in conjunction with the controller of FIGS. 1 and 3.
FIGS. 5, 6, and 7 are flowcharts representative of example processes, which may be performed to implement the example liquid level processor and/or system of FIGS. 1, 3, and 4.
FIG. 8 is a block diagram of an example processor system that may be used to implement the example methods and apparatus described herein.

### DETAILED DESCRIPTION

Although the following describes example methods and apparatus including, among other components, software and/or firmware executed on hardware, it should be noted that such systems are merely illustrative and should not be considered as limiting. For example, it is contemplated that any or all of these hardware, software, and firmware components could be embodied exclusively in hardware, exclusively in software, or in any combination of hardware and software. Accordingly, while the following describes example methods and apparatus described in conjunction with natural gas well sites, the example methods and apparatus could be used to separate gas from liquids for any application.

Natural gas well sites extract unpurified natural gas from underground natural reserves. Natural gas is extracted from the ground in a fluid mixture of liquids, mud, and gas. One of the first steps to purify natural gas is to separate any liquids, mud, and/or water vapor from the gas to enable the extracted gas to be further refined into methane and other hydrocarbon byproducts. Known well sites use a separator to separate liquids and/or water vapor from natural gas. A separator is a tank that is partitioned into a liquid collection chamber (e.g., a liquid collection tank) and a gas collection chamber (e.g., a gas collection tank). Many separators also include baffles that condense water vapor and direct liquid into the liquid collection chamber.

In many instances, a separator is connected via piping directly to a natural gas well or a borehole. The extracted mixture of liquids and gas from the borehole are directed into the separator, which then passively separates gas from liquids by enabling liquids to condense at the bottom of the separator in the liquid collection chamber and gas to collect at the top of the separator. Liquids in the liquid collection chamber are piped to liquid storage tanks to later separate oil from water. Gas in the gas collection chamber is piped to a processing facility or gas storage tanks and transported to a natural gas processing facility.

The liquid piping is usually controlled by a dump valve to maintain the liquid at a specified level in the liquid collection chamber of the separator. If the liquid drops to below a certain level, gas can enter the liquid piping and the liquid storage tanks, which are usually vented. Thus, any gas reaching the liquid storage tanks can escape and reach the atmosphere, which can result in a potentially explosive environment and may result in government fines. Additionally, if the liquid in the separator exceeds a certain level, liquid can enter the gas piping. In that case, the liquid can potentially block the piping or crack the piping if the liquid freezes. Thus, the control of the dump valve to control the liquid level is an important aspect of operating a separator and corresponding natural gas well site.

Traditionally, dump valves are powered by pressure of collected gas as a convenience because the natural gas is readily available at the well site. However, during normal dump valve operation, some gas must be vented to the atmosphere. This venting of the gas wastes natural resources that could otherwise be sold. Further, gas quality at the well site is not consistent, which can result in some impurities or particulates affecting operation of the dump valve.

In many known well sites, level switches are used to define threshold levels in a liquid collection tank. When a liquid level reaches a level switch, the switch sends an instruction and/or an indication (e.g., a signal) to a controller that the liquid has reached a certain level. In response to the indication, the controller instructs the dump valve to open for a period of time to reduce the level of the liquid in the collection tank. The opening of the dump valve is generally reactive to sensing a certain liquid level because liquids are not uniformly generated from natural gas wells. For example, during some times, relatively large amounts of liquids may be extracted from a well while during other times, relatively small amounts of liquids are extracted.

Additionally, in many known natural gas well sites, a turbine flow meter is used to determine a velocity of liquid flowing from a liquid collection chamber to liquid storage tanks. The turbine flow meter is oftentimes located within the fluid piping. In some instances, the turbine flow meter can become stuck or become difficult to rotate, which results in inaccurate flow rate outputs. In some instances, an inaccurate flow rate output from a turbine flow meter results in an inaccurate determination of a liquid level in the liquid collection chamber by a dump valve controller, thereby resulting in a liquid exceeding or receding below a specified threshold. In these instances, a technician may have to travel to the separator to manually determine a liquid level in the liquid collection chamber and fix the turbine flow meter. In some current examples, an operator may empty the liquid storage tank based on a set schedule (e.g., every two days) and/or feedback received from separate level detection apparatus (e.g., a level detector) installed in the liquid storage tank. However, such an approach may be costly and/or result in the liquid storage tank being overfilled and/or underfilled at the time the technician travels to the well sight to empty the liquid storage tank.

To maintain a liquid level in a liquid collection chamber of a separator, level switches have to be relatively responsive to changing liquid levels. However, response times for known level switches can range from a few seconds to a few minutes based on a viscosity, a temperature, a pressure, and/or a composition of a liquid. Additionally, level switches cannot detect a pressure of the liquid. Further, many known dump valve control systems utilize valves with relatively slow response times. These slow response times can result in delayed release of liquids from the liquid collection chamber, thereby exposing a separator to a liquid overflow. These known issues can also result in a liquid being drained from a collection chamber more quickly than estimated, thereby enabling gas to enter liquid storage tanks.

The example methods, apparatus, and articles of manufacture disclosed herein provide liquid level loop control for a separator through a comprehensive electric wellhead control system that responds to changes in liquid level relatively quickly. The example methods, apparatus, and articles of manufacture disclosed herein may implement a pressure sensor within, for example, a liquid collection chamber and/or liquid piping to enable an estimation of volumes of liquid passing through a dump valve based on a pressure of the liquid. In some examples, the pressure sensor may be integrated with the dump valve. The estimation of liquid volume may be used to check outputs from a turbine flow meter and/or may provide more confidence of a fluid level in a separator.

The example methods, apparatus, and articles of manufacture disclosed herein compare pressure outputs from the example pressure sensor and the turbine flow meter to determine an operational state of the turbine flow meter. Specifically, if the pressure output from the turbine flow meter is not within a specified range of deviation from the example pressure sensor, the example methods, apparatus, and articles of manufacture disclosed herein transmit a diagnostic message indicating that the turbine flow meter is in need of servicing. Thus, the implementation of a pressure sensor by the example methods, apparatus, and articles of manufacture disclosed herein reduces technician visits to a separator and improves confidence that a liquid level is not exceeding predefined thresholds.

The example methods, apparatus, and articles of manufacture disclosed herein may also use the example pressure sensor to replace level switches. In many instances, the pressure sensor utilized by the example methods, apparatus, and articles of manufacture disclosed herein provides periodic liquid pressures outputs, which is used by a dump valve controller to determine when a predetermined threshold is approached. In this manner, the example pressure sensor may be used to predict liquid levels to proactively open and/or close a dump valve instead of reacting to liquid levels using well-known level switches. Additionally, the example pressure sensor may consume relatively less power than known level switches. Further, in instances where the pressure sensor is integrated with a dump valve, the example methods, apparatus, and articles of manufacture disclosed herein reduce a number of wires coupled to the separator.

The example methods, apparatus, and articles of manufacture disclosed herein also include a dump valve with an electric actuator that can be adjusted by a dump valve controller based on liquid pressure within the liquid collection chamber and/or a pressure of a gas in the gas collection chamber. In this manner, a travel of a valve member can be modified based on detected pressure in the separator without re-calibrating (e.g., trimming) the dump valve. By utilizing an electric actuator in a dump valve, relatively higher resolution valve control may be achieved by specifying how much a valve member is to be opened to control a volume of liquid released from the separator. Thus, the electric actuator in the example dump valve provides relatively easy and quick changes to a liquid flow from the separator without having to stop a natural gas extraction process. Further, the electric actuator is configured to have relatively low power usage and does not use natural gas, thereby eliminating the wasteful use of natural gas to vent and control the dump valve.

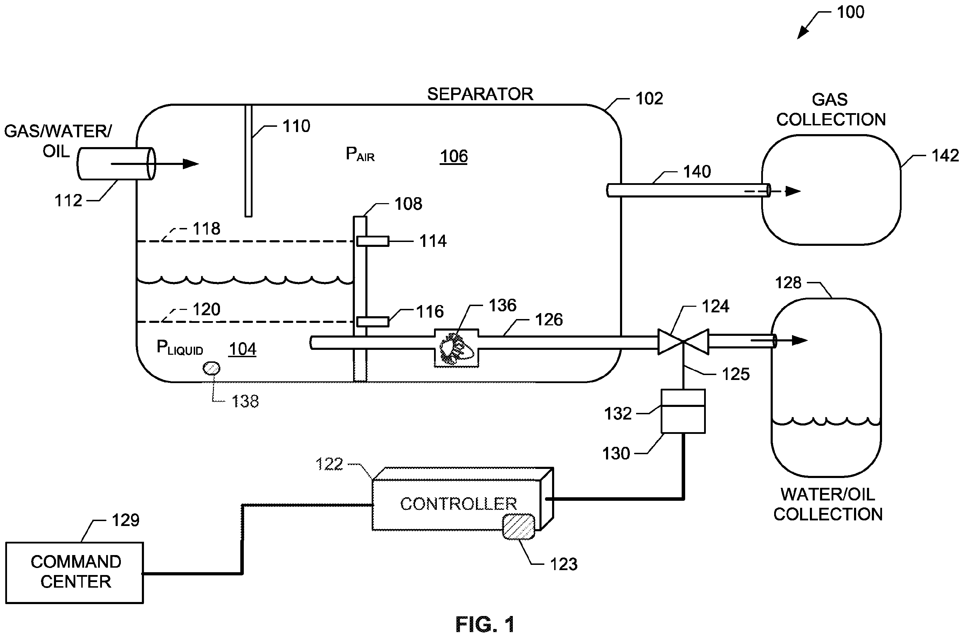

FIG. 1 shows a natural gas well site 100 constructed in accordance with the teachings of this disclosure to provide liquid level loop control. The example natural gas well site 100 includes a separator 102 that is partitioned into a liquid collection chamber 104 and a gas collection chamber 106. The example liquid collection chamber 104 is partitioned within the separator 102 via a weir plate 108. The example separator 102 includes a baffle 110 to direct liquids entering the separator 102 via inlet piping 112 into the liquid collection chamber 104. The example baffle 110 also facilitates the condensation of water vapor into water droplets that fall into the liquid collection chamber 104.

The example inlet piping 112 is coupled to a natural gas borehole and/or piping within a borehole. The inlet piping 112 directs a mixture of gas and liquids extracted from the ground into the example separator 102. The mixture can include, for example, hydrocarbon gases (e.g., methane), non-hydrocarbon gases (e.g., water vapor), hydrocarbon liquids (e.g., oil), and non-hydrocarbon liquids (e.g., mud, drilling mud, water, etc.). While the single inlet piping 112 is shown in FIG. 1, in other examples, the separator 102 may include connections for multiple inlet piping from other natural gas wells.

The example separator 102 includes level switches 114 and 116 to indicate when a liquid within the liquid collection chamber 104 reaches a certain volume (e.g., level or height along the weir plate 108). The example level switches 114 and 116 include any type of mechanical, electrical, and/or electro-mechanical switch and/or sensor to detect when a liquid reaches a specified height. In the illustrated example, the level switch 114 indicates when a liquid reaches a high threshold 118 and the level switch 116 indicates when a liquid reaches a low threshold 120. The positioning of the level switches 114 and 116 along the weir plate 108 sets the thresholds 118 and 120. In some examples, the switches 114 and 116 are integrated into a displacer or float that is mechanically coupled to a controller 122 described below. In such examples, a buoyant force and resultant movement of the displacer in the liquid is transmitted to the controller 122. The controller 122 may be used to set the thresholds 118 and 120 and/or a differential gap between the thresholds 118 and 120.

When a liquid reaches the thresholds 118 and/or 120, the respective level switch 114 and/or 116 transmits an indication to the controller 122. The indication signals the controller 122 that a liquid in the liquid collection chamber 104 has reached a specified threshold. The example level switches 114 and 116 are communicatively coupled to the controller 122 via wiring (not shown). In other examples, the level switches 114 and 116 could be wirelessly communicatively coupled to the controller 122.

The example controller 122 (e.g., a Fisher® L2e electric level controller) of the illustrated example includes a liquid level processor 123. The example liquid level processor 123 receives indications of a fluid volume and/or a liquid level from, for example, the level switches 114 and 116 to determine when to open and/or close a dump valve 124. The example liquid level processor 123 also adjusts travel of a valve member 125 (e.g., a stem) in the dump valve 124 based on conditions within the separator 102.

The example controller 122 controls the dump valve 124 to manage liquid flow through piping 126 to a liquid storage tank 128. In this example, the dump value 124 may be a Fisher® D2, D3, or D4 valve with an actuator 130. In some examples, the actuator 130 is an easy-Drive™ electric actuator, a pneumatic actuator with feedback position, a hydraulic actuator, an electric actuator, etc. The example electric actuator 130 is communicatively coupled to the controller 122 via wiring. Control signals (e.g., input signals) from the controller 122 and/or the liquid level processor 123 may include, for example, a 4-20mA signal, a 0-10 VDC signal, and/or digital commands, etc. The control signals specify or correspond to a valve state for the example dump valve 124. For example, the control signals may cause the valve member 125 of the dump valve 124 to be open, closed, or at some intermediate position. In some examples, the controller 122 may use a digital data communication protocol such as, for example, the Highway Addressable Remote Transducer (HART) protocol to communicate with a controller and/or the electric actuator 130 of the dump valve 124.

The example controller 122 of FIG. 1 is communicatively coupled to a command center 129 via any wired and/or wireless communication path. The example command center 129 may be distantly located from the controller 122 to enable control personnel to manage many natural gas well sites from a single location. The command center 129 monitors the controller 122 to identify any issues with the dump valve 124 and/or the separator 102. The example command center 129 may also instruct the controller 122 to open and/or close the dump valve 124. Additionally, the example command center 129 may take off-line the separator 102, the dump valve 124 and/or the controller 122 for maintenance, repair, and/or replacement. Further, the command center 129 may send a technician to correct issues with the separator 102 detected by the controller 122 and/or the liquid level processor 123.

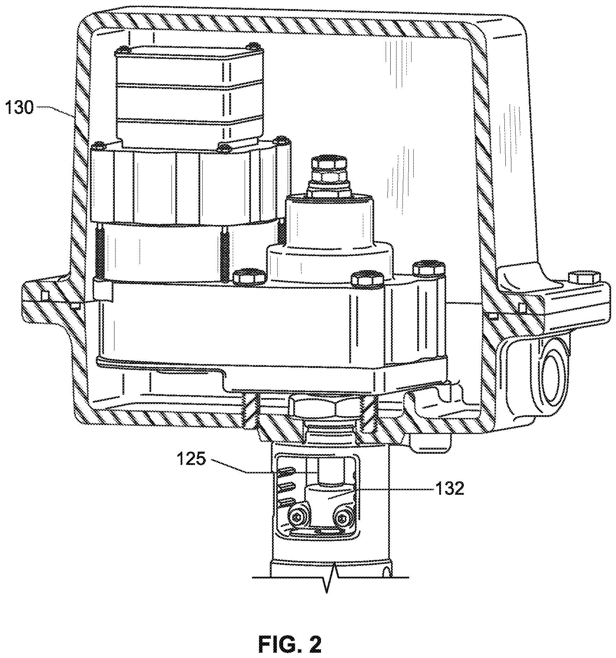

The example electric actuator 130 of FIG. 1 is shown in relatively more detail in FIG.2. The electric actuator 130 may operate at, for example 12 or 24 volts direct current (Vdc) with a 1.5 watt quiescent power draw. The reduced power draw compared to other commonly known dump valves enables the example dump valve 124 to operate the separator 102 with relatively low power consumption. Further, the example electric actuator 130 enables the dump valve 124 to be operated via electricity rather than natural gas, thereby reducing natural resources needed to operate the separator 102.

The example electric actuator 130 of FIGS. 1 and 2 includes a Fisher® FloPro liquid flow rate adjuster 132 that enables the controller 122 and/or the liquid level processor 123 to specify a maximum liquid flow rate through the dump valve 124. The flow rate adjuster 132 can be changed by the electric actuator 130 to increase or decrease a travel of the valve member 125 of the dump valve 124, thereby changing a maximum open position of the dump valve 124. The electric actuator 130 increases a maximum liquid flow through the dump valve by lowering the flow rate adjuster 132 to increase a travel length of the valve member 125. Similarly, the electric actuator 130 decreases a maximum liquid flow through the dump valve 124 by raising the flow rate adjuster 132 to decrease a travel length of a valve member 125. In this manner, the example controller 122 can control fluid flow through the dump valve 124 without having to re-calibrate and/or trim the electric actuator 130 for different pressures and/or conditions in the separator 102.

Returning to FIG. 1, the piping 126 from the fluid collection chamber 104 to the liquid storage tank 128 includes a turbine flow meter 136. The example turbine flow meter 136 measures a velocity (e.g., flow rate) of liquid flowing through the piping 126 based on the speed at which a liquid causes a turbine to rotate. The turbine flow meter 136 includes any type electrical, mechanical, and/or electro-mechanical flow meter. The example turbine flow meter 136 is communicatively coupled (not shown) to the controller 122 via any wired and/or wireless communication link.

In some instances, a liquid volume (and/or a liquid level) in the liquid collection chamber 104 is correlated to a flow rate measured by the turbine flow meter 136, thus enabling the liquid level processor 123 of the controller 122 to infer the fluid level based on a measured rotational acceleration of the turbine flow meter 136. The example liquid level processor 123 may also use the turbine flow meter 136 to determine how much liquid has passed through the dump valve 124 during a liquid release to the storage tank 128. Based on an amount of liquid released, the liquid level processor 123 can determine how much liquid is remaining in the liquid collection chamber 104 to determine when to close the dump valve 124. In this manner, the turbine flow meter 136 provides additional liquid level data to the liquid level processor 123 in conjunction to the liquid level indications from the level switches 114 and 116.

In some instances, the turbine flow meter 136 can become jammed, stuck, or have reduced rotation. In these instances, the liquid level processor 123 may not receive accurate flow rate information to determine how much liquid has passed through the dump valve 124. In many known examples, the liquid level processor 123 has to rely on the low level switch 116 to indicate when the liquid level has reached the low threshold 120. However, based on relatively slow response times associated with the dump valve 124 and/or the relatively slow movement of an associated actuator, the liquid level may overshoot the threshold 120 until the actual liquid level is close to the level of the piping 126. While the example liquid level processor 123 can instruct the electric actuator 130 to close the dump valve relatively quickly, this delay can result in some gas entering the piping 126.

To provide a diagnostic check of the turbine flow meter 136, the example separator 102 of FIG. 1 includes a pressure sensor 138. The example pressure sensor 138 may include any electrical, mechanical, and/or electro-mechanical pressure sensor capable of detecting a pressure of a liquid (P_{Liquid}). The example pressure sensor 138 is communicatively coupled (not shown) to the liquid level processor 123 of the controller 122 via any wired and/or wireless communication link. In the illustrated example, the pressure sensor 138 is shown in the liquid collection chamber 104. In other examples, the pressure sensor 138 may be located within the piping 126 and/or integrated with the dump valve 124. In examples where the pressure sensor 138 is integrated with the dump valve 124, the pressure sensor 138 may communicate with the controller 122 via a controller and/or the electric actuator 130.

The example pressure sensor 138 is calibrated with the liquid level processor 123 so that liquid pressure outputs correspond to a volume of liquid in the collection chamber 104, a liquid level in the chamber 104 and/or the velocity of the liquid flowing through the dump valve 124. Further, the liquid pressure outputs can be correlated to known flow rates of liquid through the piping 126. Thus, the pressure output enables the example liquid level processor 123 to determine an operational state of the turbine flow meter 136 by comparing the pressure reading from the pressure sensor 138 with the converted pressure corresponding to a flow rate reported by the turbine flow meter 136. If the liquid level processor 123 determines that a pressure reading from the turbine flow meter 136 is outside a specified range of deviation from the pressure reading from the pressure sensor 138, the example liquid level processor 123 transmits a diagnostic message to the command center 129 to indicate that the turbine flow meter 136 needs to be serviced. While the turbine flow meter 136 is inoperable, the liquid level processor 123 may use the pressure output from the pressure sensor 138 to control the dump valve 124. For example, the liquid level processor 123 may determine that when a liquid pressure approaches a specified threshold, the dump valve 124 is to be opened or closed.

In other examples, the pressure output from the pressure sensor 138 can be correlated to a flow rate of the liquid through the piping 126 and compared to a flow rate indicated by the turbine flow meter 136. The example controller 122 may also use pressure outputs from the pressure sensor 138 to adjust the maximum travel of the valve member 125 via the flow rate adjuster 132. For example, the controller 122 may instruct the flow rate adjuster 132 to increase the amount of travel of the valve member 125 to increase the maximum flow through the dump valve 124 when a relatively high pressure is detected by the pressure sensor 138.

The example separator 102 of FIG. 1 also includes piping 140 that couples the gas collection chamber 106 to a gas storage tank 142. The example gas collection chamber 106 enables gas within the fluid mixture from a borehole to separate from liquids. A pressure of the gas (e.g., P_{AIR}) in the collection chamber 106 forces the gas to the relatively lower pressure storage tank 142. Alternatively, the piping 140 may direct the gas to a compressor that pipes the gas to a processing facility.

The example natural gas well site 100 shown in FIG. 1 shows a single stage separator 102. In other examples, the separator 102, the controller 122, the dump valve 124, etc. may be implemented in a non-associated natural gas well site and/or an oil well site. Further, the example natural gas well site 100 may be implemented using multiple stage separators. In these alternative examples, the separator 102 may extract high pressure gas from a fluid mixture and pipe a mixture of low pressure gas and liquids to a second separator that enables the low pressure gas to separate from the liquids. The multiple stage separators may each have dump valves (e.g., similar or identical to the dump valve 124) that are controlled by, for example, the controller 122. Further, the high pressure separator may have piping that releases heavier water and/or hydrocarbons into one storage tank and separate piping that releases oil-gas fluid mixtures to the low pressure separator. In these examples, the liquid level processor 123 may control and/or coordinate the opening/closing of multiple dump valves to maintain liquid levels of the multiple separators within specified thresholds.

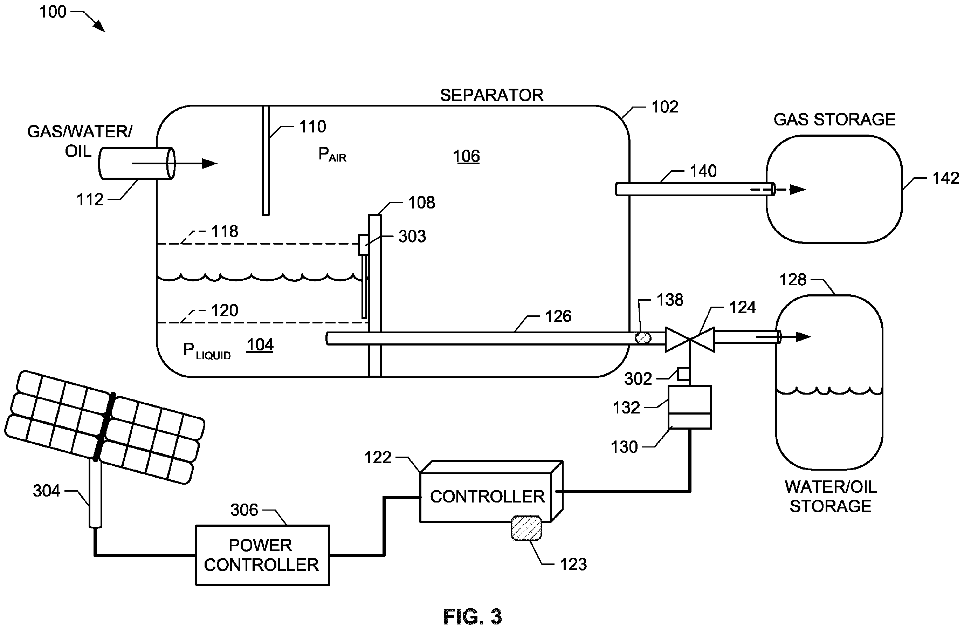

FIG. 3 shows the example natural gas well site 100 of FIG. 1 with the example dump valve 124 including a contact sensor 302. The example contact sensor 302 senses a position of the example valve member 125 of FIGS. 1 and 2. The example contact sensor 302 provides position information of the valve member 125 to the electric actuator 130 for a feedback control loop in, for example, the liquid level processor 123 to control fluid flow through the dump valve 124. The example liquid level processor 123 uses the reported position of the valve member 125 to precisely control an amount the dump valve 124 is open, thereby providing accurate liquid level control. The example contact sensor 302 may include any electric, mechanical, and/or electro-mechanical contact sensor and/or switch.

The illustrated example also includes an electric level switch 303 to measure a liquid level in the liquid collection chamber 104. The example electric level switch 303 may include a type of electric switch to detect a liquid level based on the liquid imposing a displacement force on a rod. The electric level switch 303 may sense movement of the rod via any type of magnetic and/or inductive sensor. The example electric level switch 303 sends a message and/or a signal to the controller 122 indicating a liquid level. The electric level switch 303 is communicatively coupled to the controller 122 via any wired and/or wireless communication link.

The example electric level switch 303 of FIG. 3 is used in conjunction with the pressure sensor 138 by the example liquid level processor 123 to determine a liquid volume within the collection chamber 104 and a volume of liquid flowing through the dump valve 124. In this illustrated example, the pressure sensor 138, the electric level switch 303, and/or the contact sensor 302 replace the level switches 114 and 116 and the turbine flow meter 136 of FIG. 1, thereby reducing a power consumed to operate the separator 102. Further, the illustrated example shows the pressure sensor 138 located within the piping 126. In other examples, the pressure sensor 138 may be integrated with the dump valve 124. In yet other examples, the separator 102 may include an air sensor to determine a pressure of a gas in the gas collection chamber 106.

In FIG. 3, the natural gas well site 100 is a remote site that operates via solar power collected by a solar power collection system 304. The collection system 304 may include any number and/or types of solar panels and infrastructure to convert light energy from the sun into electricity. In other examples, the natural gas well site 100 may be powered by one or more wind turbines.

A power controller 306 stores energy collected by the solar power collection system 304. The power controller 306 may include any number and/or types of batteries to store energy for the controller 122, the pressure sensor 138, and/or the dump valve 124. In this example, the controller 122 may operate the dump valve 124 without any supervision from the command center 129 of FIG. 1 because the natural gas well site 100 is remote. Alternatively, the controller 122 may be wirelessly communicatively coupled to the command center 129.

The example power controller 306 of FIG. 3 includes an algorithm, routine, and/or functionality to manage energy storage from the collection system 304 and energy distribution to the controller 122, the pressure sensor 138, and/or the dump valve 124. The example liquid level processor 123 may also be configured to reduce power consumption by reducing a number of times the dump valve 124 is opened/closed. For example, the low threshold 120 may be set to closer to a level of the piping 126 because the pressure sensor 138, the electronic actuator 130, and/or the liquid level processor 123 has a relatively quicker and more accurate response to detected liquid levels.

In the illustrated example, the utilization of the example contact sensor 302, the electric level switch 303, and the pressure sensor 138 in conjunction with the low power electric actuator 130 and the example controller 122 provides a relatively low power system to operate the example separator 102 using remote renewable energy. Thus, the example liquid level processor 123 controls liquid levels within the separator 102 without constant oversight by technicians and/or process personnel. This reduced oversight reduces costs of operating the natural gas well site 100.

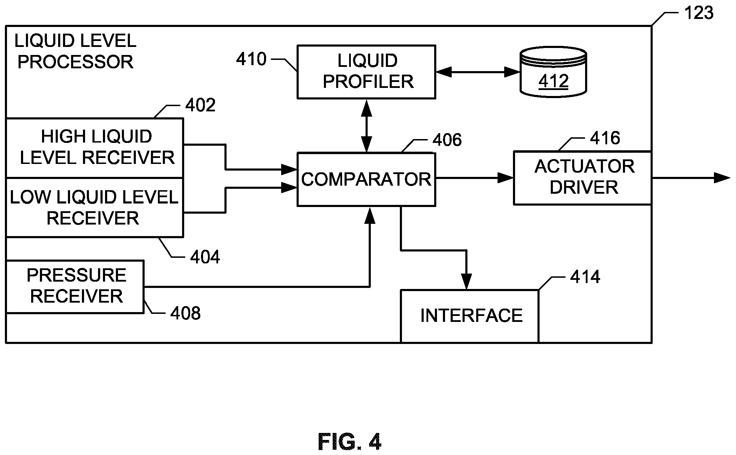

FIG. 4 shows a diagram of the example liquid level processor 123 of FIGS. 1 and 3. The example liquid level processor 123 operates in conjunction with the example controller 122. For example, the liquid level processor 123 may use communication functionality in the controller 122 to communicate with the command center 129. Additionally, the controller 122 may manage power for the liquid level processor 123. In other examples, the liquid level processor 123 may be separate and communicatively coupled to the controller 122. In these other examples, the liquid level processor 123 may be hosted by a server, a computer, a smartphone, a computing pad, etc.

To receive indications from the level sensors 114 and 116 of FIG. 1, the example liquid level processor 123 includes a high liquid level receiver 402 and a low liquid level receiver 404. The example high liquid level receiver 402 receives indications from the level sensor 114 that a liquid level in the liquid collection chamber 104 has reached the high threshold 118. The example low liquid level receiver 404 receives indications from the level sensor 116 that the liquid level has reached the low threshold 120.

The example receivers 402 and 404 convert the indications from the level sensors 114 and 116 into digital and/or analog data readable by, for example, a comparator 406. For example, the level switches 114 and 116 may output a discrete voltage when a liquid level reaches the respective thresholds 118 and 120. The receivers 402 and 404 convert the discrete voltage into a corresponding digital signal and/or a corresponding analog signal for the comparator 406. In some examples, the receivers 402 and 404 may queue the received indications until the comparator 406 is available to process the data.

To receive outputs from the turbine flow meter 136 and the pressure sensor 138, the example liquid level processor 123 of FIG. 4 includes a pressure receiver 408. The example pressure receiver 408 receives and processes outputs from the devices 136 and 138 into a format that is compatible with the comparator 406. For example, the pressure receiver 408 converts an analog signal from the pressure sensor 138 into a corresponding digital signal. The example pressure receiver 408 also converts, for example, an analog flow rate from the turbine flow meter 136 into a digital signal.

Alternatively, the example pressure receiver 408 may be configured for the HART communication protocol. In these examples, the pressure receiver 408 receives HART output messages from the turbine flow meter 136 and the pressure sensor 138 and converts the HART messages into a format compatible with the comparator 406. However, in other examples the output message received may be Modbus outputs, communication protocol outputs, etc. In these examples, the pressure receiver 408 sends a message to request output data from the turbine flow meter 136 and/or the pressure sensor 138.

The example pressure receiver 408 of the illustrated example also receives data from any pressure sensors within the separator 102, the electric level switch 303, and/or data from the electronic actuator 130 of the dump valve 124. For example, in instances where the pressure sensor 138 is integrated with the dump valve 124, the pressure receiver 408 receives pressure data from the electronic actuator 130 and/or a controller of the dump valve 124. In other examples where the dump valve 124 includes the contact sensor 302 of FIG. 3, the example pressure receiver 408 receives position data of the valve member 125.

To control the dump valve 124 and determine an operational state of the turbine flow meter 136, the example liquid level processor 123 of FIG. 4 includes the comparator 406. The example comparator 406 receives pressure outputs from the pressure sensor 138 and liquid level indications from the level sensors 114 and 116 via the respective receivers 402, 404, and 408. The example comparator 406 also receives flow rate information from the turbine flow meter 136 and/or a position of the valve member 125 via the contact sensor 302 of FIG. 3.

To determine an operational state of the turbine flow meter 136, the example comparator 406 instructs a liquid profiler 410 to access a database 412 that includes correlation information. The comparator 406 uses this information to convert a flow rate into a volume of liquid and/or a pressure of a liquid. The example database 412 may be implemented by EEPROM, RAM, ROM, and/or any other type of memory.

After converting the flow rate from the turbine flow meter 136, the comparator 406 compares the volume and/or pressure to a pressure reported and/or a volume converted from the pressure sensor 138. The example comparator 406 determines if a difference between outputs of the turbine flow meter 136 and the pressure sensor 138 is outside of a specified range of deviation. Based on an amount of deviation, the comparator 406 determines an operational state of the turbine flow meter 136. For example, if the amount of deviation is relatively moderate, the comparator 406 may determine that the turbine flow meter 136 has reduced rotation due to debris and/or rust. Additionally, if the amount of deviation is relatively large, the comparator 406 may determine that the turbine flow meter 136 is unable to turn and/or is broken. Alternatively, if the amount of deviation is relatively small and within the specified deviation, the comparator 406 may determine that the turbine flow meter 136 is operating as intended.

Based on a determined operational state of the turbine flow meter 136, the example comparator 406 instructs an interface 414 to send a diagnostic message to, for example, the command center 129 indicating the detected issue. In response to the message, the command center 129 may send a technician to resolve the issue with the turbine flow meter 136 and/or send instructions to the turbine flow meter 136 to resolve the detected issue. The example comparator 406 may also store the determined operational state of the turbine flow meter to the database 412.

The example comparator 406 of the illustrated example determines a maximum opening for the valve member 125 based on information from the pressure sensor 138, the turbine flow meter 126, the level sensors 114 and 116, and/or a gas sensor. The comparator 406 determines a maximum travel (e.g., a maximum open amount) for the valve member 125 to restrict an amount of liquid that can pass through the dump valve 124 in instances where the dump valve 124 does not include a contact sensor 302. In these instances, the dump valve 124 may not have accurate feedback control to partially open the valve member 125. To set the maximum travel, the example comparator 406 sends an instruction to the electronic actuator 130 to modify a maximum opening of the valve member 125 via the flow rate adjuster 132. Thus, by setting a maximum travel for the valve member 125, the comparator 406 instructs the electric actuator 130 to open the valve member 125 relatively quickly to the set maximum travel without the dump valve 124 having to monitor the travel of the valve member 125.

Alternatively, when the dump valve 124 includes a contact sensor 302, the example comparator 406 determines how much the valve member 125 is to be opened based on an amount of liquid that is to be released from the liquid collection chamber 104. In these examples, the comparator 406 instructs an actuator driver 416 to send a message and/or a signal to a controller and/or the electronic actuator 130 to open the valve member 125 by the specified amount.

The example comparator 406 of FIG. 4 uses the information from the pressure sensor 138, the turbine flow meter 126, the level sensors 114 and 116, and/or a gas sensor to determine how much liquid and/or an amount of time the dump valve 124 is to be open. For example, the comparator 406 receives an indication from the pressure sensor 138 that a liquid level is approaching the high threshold 118. The comparator 406 then accesses the database 412 via the liquid profiler 410 to determine an amount of liquid that should be released based on a current pressure of gas in the gas collection chamber 106, a maximum amount the dump valve 124 can be opened, and/or a liquid flow rate through the dump valve 124. The example comparator 406 then instructs the actuator driver 416 to send an instruction to the dump valve 124 to open the valve member 125 to begin the liquid release. Upon reaching a determined time and/or determined amount of liquid to be released, the example comparator 406 instructs the actuator driver 416 to close the dump valve 124. In other examples, the comparator 406 may refine its time and/or volume calculations based on more recent fluid flow rates from the turbine flow meter 136 and/or a pressure of a liquid from the pressure sensor 138.

The example comparator 406 may also store liquid profile data to the database 412. The liquid profile data includes characteristics describing how liquid level changes in the separator 102 based on detected liquid pressures, gas pressures, and/or liquid flow rates through the piping 126. The example liquid profiler 410 may use the stored data to create, modify, and/or refine correlations between liquid level in the liquid collection chamber 104, liquid pressure, gas pressure, and/or liquid flow rates through the piping 126. For example, the liquid profiler 410 may determine that a certain liquid pressure corresponds to the liquid collection tank 104 being half full when a gas pressure is 2.5 atmospheres. The liquid profiler 410 may also adjust profile information based on an amount the valve member 125 is open. Further, the liquid profiler 410 may re-trim (e.g., recalibrate) the profile information when, for example, the dump valve 124, the turbine flow meter 136, the pressure sensor 138, the level switches 114 and 116, the piping 126, and/or portions of the liquid collection chamber 104 are replaced and/or modified.

To interface with the dump valve 124, the example liquid level processor 123 includes the actuator driver 416. The example actuator deriver 416 receives messages from the comparator 406 and transmits an instruction and/or a signal to a controller of the dump valve 124 and/or the electric actuator 130. In instances where the dump valve 124 is compliant with a process control communication protocol (e.g., HART, Profibus, and/or Foundation Fieldbus), the actuator driver 416 creates the appropriate message and transmits the message to the dump valve 124. In other instances, the actuator driver 416 may provide power to drive the electronic actuator 130 to cause the valve member 125 to open/close.

While an example manner of implementing the example liquid level processor 123 has been illustrated in FIG. 4, one or more of the elements, processes and/or devices illustrated in FIG. 4 may be combined, divided, re-arranged, omitted, eliminated and/or implemented in any other way. Further, the example receivers 402, 404, and 408, the example comparator 406, the example liquid profiler 410, the example database 412, the example interface 414, the example actuator driver 416 and/or, more generally, the example liquid level processor 123 of FIG. 4 may be implemented by hardware, software, firmware and/or any combination of hardware, software and/or firmware. Thus, for example, any or all of the example receivers 402, 404, and 408, the example comparator 406, the example liquid profiler 410, the example database 412, the example interface 414, the example actuator driver 416 and/or, more generally, the example liquid level processor 123 could be implemented by one or more circuit(s), programmable processor(s), application specific integrated circuit(s) (ASIC(s)), programmable logic device(s) (PLD(s)) and/or field programmable logic device(s) (FPLD(s)), etc.

When any of the apparatus claims of this patent are read to cover a purely software and/or firmware implementation, at least one of the example receivers 402, 404, and 408, the example comparator 406, the example liquid profiler 410, the example database 412, the example interface 414, and/or the example actuator driver 416 are hereby expressly defined to include a tangible computer readable medium such as a memory, DVD, CD, Blu-ray disc, etc. storing the software and/or firmware. Further still, the liquid level processor 123 of FIG. 4 may include one or more elements, processes and/or devices in addition to, or instead of, those illustrated in FIG. 4 and/or may include more than one of any or all of the illustrated elements, processes and devices.

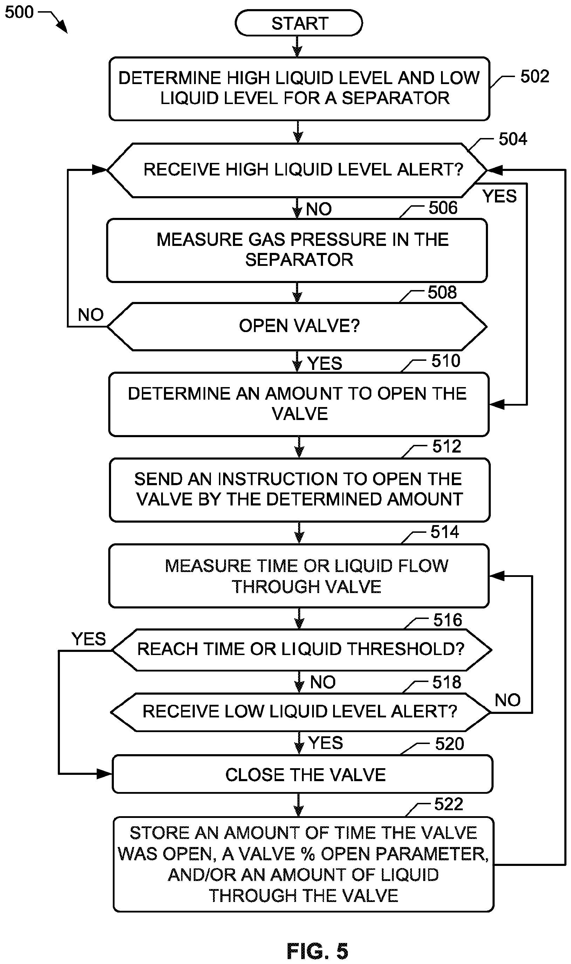

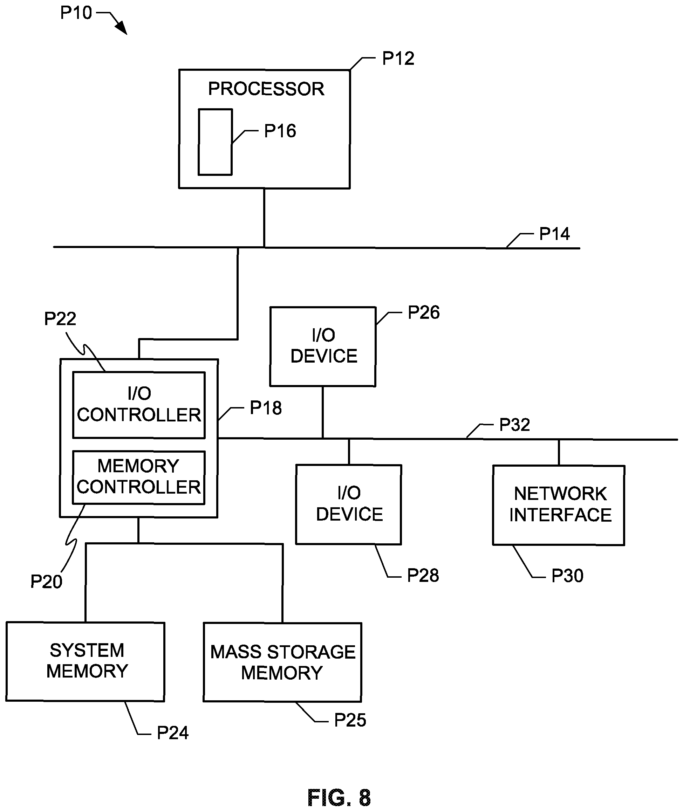

A flowchart representative of example processes for implementing the liquid level processor 123 of FIGS. 1, 3, and 4 is shown in FIGS. 5, 6, and 7. In this example, the processes may be implemented as a program for execution by a processor such as the processor P12 shown in the example processor system P10 discussed below in connection with FIG. 8. The program may be embodied as machine readable instructions or software stored on a computer readable medium such as a CD, a floppy disk, a hard drive, a DVD, Blu-ray disc, or a memory associated with the processor P12, but the entire program and/or parts thereof could alternatively be executed by a device other than the processor P12 and/or embodied in firmware or dedicated hardware. Further, although the example program is described with reference to the flowchart illustrated in FIGS. 5, 6, and 7, many other methods of implementing the example liquid level processor 123 may alternatively be used. For example, the order of execution of the blocks may be changed, and/or some of the blocks described may be changed, eliminated, or combined.

As mentioned above, the example processes of FIGS. 5, 6, and 7 may be implemented using coded instructions (e.g., computer readable instructions) stored on a tangible computer readable medium such as a hard disk drive, a flash memory, a ROM, a CD, a DVD, a Blu-ray disc, a cache, a RAM and/or any other storage media in which information is stored for any duration (e.g., for extended time periods, permanently, brief instances, for temporarily buffering, and/or for caching of the information). As used herein, the term tangible computer readable medium is expressly defined to include any type of computer readable storage and to exclude propagating signals. Additionally or alternatively, the example processes of FIGS. 5, 6, and 7 may be implemented using coded instructions (e.g., computer readable instructions) stored on a non-transitory computer readable medium such as a hard disk drive, a flash memory, a read-only memory, a compact disk, a digital versatile disk, a cache, a random-access memory and/or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium and to exclude propagating signals.

The example processes 500 of FIG. 5 begins with the liquid level processor 123 of FIGS. 1, 3, and 4 determining the high threshold 118 (e.g., a high liquid level) and the low threshold 120 (e.g., a low liquid level) for the separator 102 (block 502). The example liquid level processor 123 may receive the thresholds 118 and 120 from an operator and/or determine the thresholds 118 and 120 based on levels of the piping 126 and 140. The example comparator 406 of FIG. 4 then determines if a high liquid level alert (e.g., indication) is received from the level sensor 114 (block 504).

If an indication was not received, the example comparator 406 requests and/or receives a pressure of a gas within the separator (block 506). The example comparator 406 next determines if the dump valve 124 should be opened based on the gas pressure and/or a level of the liquid (block 508). If the comparator 406 is not to open the dump valve 124, the example comparator 406 continues to monitor for an indication of a high liquid level (block 504).

If the comparator 406 receives an indication of a high liquid level (block 504) and/or determines that the dump valve 124 is to be opened (block 508), the comparator 406 then determines an amount to open the dump valve 124 (block 510). The amount to open the dump valve 124 may include setting a maximum travel of the valve member 125 via the flow rate adjuster 132 and/or determining an amount to move the valve member 125 using feedback from the example contact sensor 302 of FIG. 3. The example comparator 406 then transmits a message to the actuator driver 416 to open the dump valve (and/or set a maximum travel of the valve member 125) by the determined amount (block 512).

After opening the dump valve 124, the example comparator 406 measures a time and/or an amount of liquid flowing through the dump valve 124 (block 514). The comparator 406 may also compare an output from the turbine flow meter 136 to an output from a pressure sensor to determine an operational state of the turbine flow meter 136. The comparator 406 then determines if a time threshold and/or a released liquid threshold has been reached so as to not allow gas to enter the piping 126 (block 516). If the thresholds have not been reached, the example comparator 406 determines if a low liquid level alert (e.g., an indication) is received from the level sensor 116 (block 518). If an indication has not been received, the example comparator 406 continues to measure the time the dump valve is open 124 and an amount of fluid flowing through the valve 124 (block 514).

If the time threshold and/or an amount of liquid through the dump valve 124 threshold has been reached (block 516) or a low liquid level indication is received (block 518), the example comparator 406 sends a message to the actuator driver 416 to close the dump valve 124 (block 520). The example comparator 406 and/or the liquid profiler 410 then stores to the database 412 an amount of time the dump valve 124 was open, an amount the dump valve 124 was open, an amount of liquid that flowed through the dump valve 124, a starting liquid level before the dump valve 124 was opened, and/or an ending liquid level when the dump valve was closed (block 522). The example liquid profiler 410 may use this information to modify and/or adjust any pressure-to-volume correlation data and/or any models of liquid release based on an amount the dump valve 124 is open. The example comparator 406 and/or the liquid level processor 123 then returns to determining if a high liquid level indication is received from the level sensor 114 (block 504).

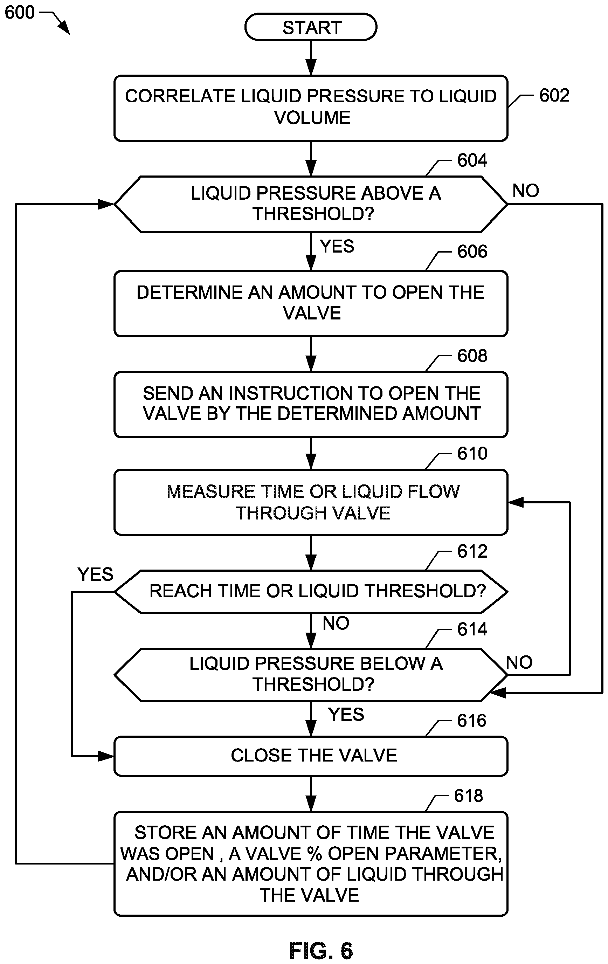

The example process 600 of FIG. 6 use the example pressure sensor 138 of FIGS. 1 and 3 in place of the level switches 114 and 116 and/or the turbine flow meter 136 to determine an amount of liquid in the liquid collection chamber 104. The example process 600 begins when the example liquid level processor 123 of FIGS. 1 3, and 4 correlates a liquid pressure to a liquid volume in the liquid collection chamber 104 (block 602). The example comparator 406 then determines if a liquid pressure measured by the pressure sensor 138 is above a specified threshold (block 604).

If the liquid pressure is above a threshold, the example comparator 406 determines an amount to open the dump valve 124 of FIGS. 1 and 3 (and/or an amount to set a maximum travel of the valve member 125) (block 606). The example comparator 406 then transmits a message to the actuator driver 416 to open the dump valve (and/or set a maximum travel of the valve member 125) by the determined amount (block 608).

After opening the dump valve 124, the example comparator 406 measures a time and/or an amount of liquid flowing through the dump valve 124 (block 610) by determining an amount of pressure decrease measured by the pressure sensor 138. The comparator 406 then determines if a time threshold and/or a released liquid threshold has been reached so as to not allow gas to enter the piping 126 (block 612). If the thresholds have not been reached, the example comparator 406 determines if the liquid pressure reported by the pressure sensor 138 is below a threshold indicating that liquid level is approaching the level of the piping 126 (block 614). If the liquid level is not at and/or close to the threshold, the example comparator 406 continues to measure time the dump valve is open 124 and/or an amount of fluid flowing through the valve 124 via the pressure sensor 138 (block 610).

If the time threshold and/or an amount of liquid through the dump valve 124 threshold has been reached (block 612) or the pressure of the liquid indicates the liquid is close to the low threshold 120 (block 614), the example comparator 406 sends a message to the actuator driver 416 to close the dump valve 124 (block 616). The example comparator 406 and/or the liquid profiler 410 then stores to the database 412 an amount of time the dump valve 124 was open, an amount the dump valve 124 was open, an amount of liquid that flowed through the dump valve 124 (e.g., a difference in liquid pressure), a starting liquid level before the dump valve 124 was opened (e.g., a starting liquid pressure) and/or an ending liquid level when the dump valve was closed (e.g., a ending liquid pressure) (block 618). The example liquid profiler 410 may use this information to modify and/or adjust any pressure-to-volume correlation data and/or any models of liquid release based on an amount the dump valve 124 is open. The example comparator 406 and/or the liquid level processor 123 then returns to determining if the pressure of the liquid indicates the liquid level is close to and/or at the high threshold 118 via the pressure sensor 138 (block 604).

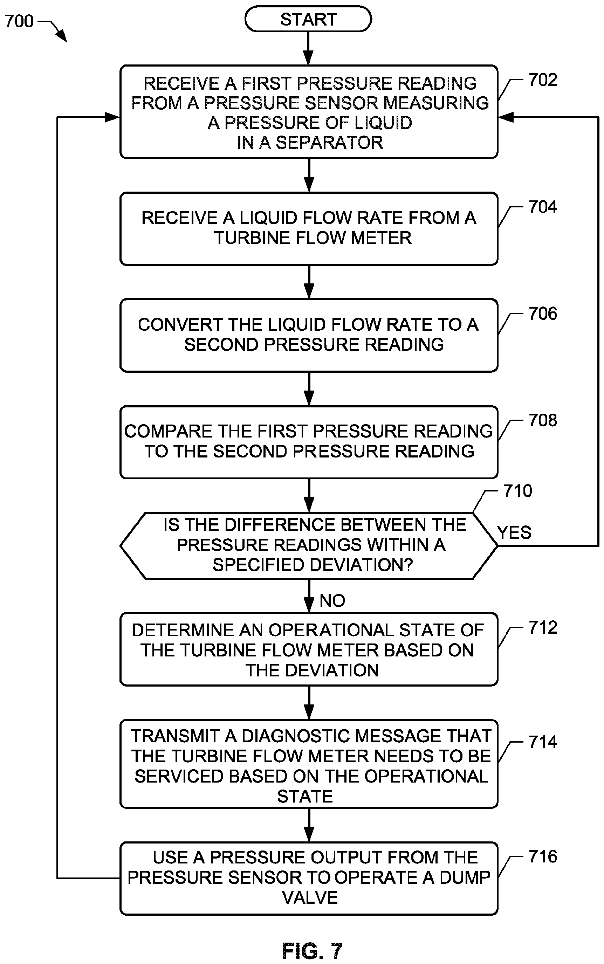

The example process 700 of FIG. 7 determines an operational state of the turbine flow meter 136. The example process 700 begins when the example comparator 406 and/or the pressure receiver 408 of FIG. 4 receives a first pressure reading from the pressure sensor 138 measuring a pressure of a liquid within the separator 102 of FIGS. 1 and 3 (block 702). The example comparator 406 and/or the example pressure receiver 408 then receives a liquid flow rate from the turbine flow meter 136 (block 704). The example comparator 406 next converts the flow rate into a second pressure reading using correlation data stored in, for example, the database 412 (block 706).

The example comparator 406 then compares the first pressure reading to the second pressure reading to determine a difference (block 708). If the difference between the pressure readings is within a specified deviation, the comparator 406 determines the turbine flow meter 138 is in a normal operational state. The example comparator 406 and/or the pressure receiver 408 then returns to receiving pressure readings and flow rate data to monitor the operational state of the turbine flow meter 136 (blocks 702-708).

If the difference between the pressures is outside of a specified deviation, the example comparator 406 accesses the database 412 to determine an operational state of the turbine flow meter 136 based on the amount of the deviation (block 712). For example, a relatively small deviation may indicate that the turbine flow meter 136 has reduced rotation from normal wear or rust. Additionally, a relatively large deviation may indicate that the turbine flow meter 136 is unable to rotate as a result of debris blockage.

The example comparator 406 via the interface 414 next transmits a diagnostic message to, for example, the command center 129 indicating that the turbine flow meter 136 needs services based on the determined operational state (block 714). Prior to the turbine flow meter 136 being serviced, the example comparator 406 may use the pressure output from the pressure sensor 138 to operate the dump valve 124. In this manner, the pressure sensor 138 serves as a backup until the turbine flow meter 136 is serviced. Once the turbine flow meter is serviced, the example comparator 406 and/or the pressure receiver 408 return to comparing the output from the pressure sensor 138 to the output of the turbine flow meter 136 (blocks 702-708). In other examples, the comparator 406 may continue to compare the output from the pressure sensor 138 to the output of the turbine flow meter 136 before the meter 136 is serviced to determine if the deviation subsides.

FIG. 8 is a block diagram of an example processor system P10 that may be used to implement the example methods and apparatus described herein. For example, processor systems similar or identical to the example processor system P10 may be used to implement the example receivers 402, 404, and 408, the example comparator 406, the example liquid profiler 410, the example database 412, the example interface 414, the example actuator driver 416 and/or, more generally, the example liquid level processor 123 of FIGS. 1, 3 and 4. Although the example processor system P10 is described below as including a plurality of peripherals, interfaces, chips, memories, etc., one or more of those elements may be omitted from other example processor systems used to implement one or more of the example receivers 402, 404, and 408, the example comparator 406, the example liquid profiler 410, the example database 412, the example interface 414, the example actuator driver 416 and/or, more generally, the example liquid level processor 123.

As shown in FIG. 8, the processor system P10 includes a processor P12 that is coupled to an interconnection bus P14. The processor P12 includes a register set or register space P16, which is depicted in FIG. 8 as being entirely on-chip, but which could alternatively be located entirely or partially off-chip and directly coupled to the processor P12 via dedicated electrical connections and/or via the interconnection bus P14. The processor P12 may be any suitable processor, processing unit or microprocessor. Although not shown in FIG. 8, the system P10 may be a multi-processor system and, thus, may include one or more additional processors that are identical or similar to the processor P12 and that are communicatively coupled to the interconnection bus P14.

The processor P12 of FIG. 8 is coupled to a chipset P18, which includes a memory controller P20 and a peripheral input/output (I/O) controller P22. As is well known, a chipset typically provides I/O and memory management functions as well as a plurality of general purpose and/or special purpose registers, timers, etc. that are accessible or used by one or more processors coupled to the chipset P18. The memory controller P20 performs functions that enable the processor P12 (or processors if there are multiple processors) to access a system memory P24 and a mass storage memory P25.

The system memory P24 may include any desired type of volatile and/or non-volatile memory such as, for example, static random access memory (SRAM), dynamic random access memory (DRAM), flash memory, read-only memory (ROM), etc. The mass storage memory P25 may include any desired type of mass storage device. For example, if the example processor system P10 is used to implement database 412 (FIG. 4), the mass storage memory P25 may include a hard disk drive, an optical drive, a tape storage device, etc. Alternatively, if the example processor system P10 is used to implement the database 412, the mass storage memory P25 may include a solid-state memory (e.g., a flash memory, a RAM memory, etc.), a magnetic memory (e.g., a hard drive), or any other memory suitable for mass storage in the database 412.

The peripheral I/O controller P22 performs functions that enable the processor P12 to communicate with peripheral input/output (I/O) devices P26 and P28 and a network interface P30 via a peripheral I/O bus P32. The I/O devices P26 and P28 may be any desired type of I/O device such as, for example, a keyboard, a display (e.g., a liquid crystal display (LCD), a cathode ray tube (CRT) display, etc.), a navigation device (e.g., a mouse, a trackball, a capacitive touch pad, a joystick, etc.), etc. The network interface P30 may be, for example, an Ethernet device, an asynchronous transfer mode (ATM) device, an 802.11 device, a DSL modem, a cable modem, a cellular modem, etc. that enables the processor system P10 to communicate with another processor system.

While the memory controller P20 and the I/O controller P22 are depicted in FIG. 8 as separate functional blocks within the chipset P18, the functions performed by these blocks may be integrated within a single semiconductor circuit or may be implemented using two or more separate integrated circuits.

At least some of the above described example methods and/or apparatus are implemented by one or more software and/or firmware programs running on a computer processor. However, dedicated hardware implementations including, but not limited to, application specific integrated circuits, programmable logic arrays and other hardware devices can likewise be constructed to implement some or all of the example methods and/or apparatus described herein, either in whole or in part. Furthermore, alternative software implementations including, but not limited to, distributed processing or component/object distributed processing, parallel processing, or virtual machine processing can also be constructed to implement the example methods and/or systems described herein.

It should also be noted that the example software and/or firmware implementations described herein are stored on a tangible storage medium, such as: a magnetic medium (e.g., a magnetic disk or tape); a magneto-optical or optical medium such as an optical disk; or a solid state medium such as a memory card or other package that houses one or more read-only (non-volatile) memories, random access memories, or other re-writable (volatile) memories. Accordingly, the example software and/or firmware described herein can be stored on a tangible storage medium such as those described above or successor storage media. To the extent the above specification describes example components and functions with reference to particular standards and protocols, it is understood that the scope of this patent is not limited to such standards and protocols.

Additionally, although this patent discloses example methods and apparatus including software or firmware executed on hardware, it should be noted that such systems are merely illustrative and should not be considered as limiting. For example, it is contemplated that any or all of these hardware and software components could be embodied exclusively in hardware, exclusively in software, exclusively in firmware or in some combination of hardware, firmware and/or software. Accordingly, while the above specification described example methods, systems, and articles of manufacture, the examples are not the only way to implement such systems, methods and articles of manufacture. Therefore, although certain example methods, systems, and articles of manufacture have been described herein, the scope of coverage of this patent is not limited thereto. On the contrary, this patent covers all methods, systems, and articles of manufacture fairly falling within the scope of the appended claims either literally or under the doctrine of equivalents.

## Claims

1. A method for determining an operational state of a turbine flow meter in a liquid level loop control (500, 600, 700), comprising:
determining via a sensor (138) a first pressure of a liquid in a tank (104);
determining via the turbine flow meter (136) a second pressure of the liquid in the tank (104) using correlation information to convert a liquid flow rate through the turbine flow meter to the second pressure;
determining if the first pressure is within a specified range of deviation from the second pressure to determine an operational state of the turbine flow meter (136); and
based on the operational state of the turbine flow meter, transmitting a diagnostic message indicating that the turbine flow meter (136) needs to be serviced based on the state of the turbine flow meter (136).

2. A method as defined in any one of the preceding claims, further comprising:
determining a volume of the liquid in the tank (104) based on the first pressure or the second pressure; and
opening a valve (124) to release a portion of the liquid from the tank (104) when the volume of the liquid exceeds a predetermined threshold (118).

3. A method as defined in claim 2, wherein the portion of the liquid is released to prevent the liquid from overflowing from the tank (104) and entering piping (140) intended for a gas.

4. A method as defined in any one of claims 2 or 3, further comprising determining an amount to open the valve (124) based on the volume of liquid in the tank (104).

5. A method as defined in any one of claims 2-4, further comprising determining a length of time to open the valve (124) and an amount to open the valve (124) based on the volume of liquid in the tank (104).

6. A method as defined in any one of claims 2-5, further comprising:
determining a second volume of the liquid based on the first pressure or the second pressure; and
closing the valve (124) to prevent the liquid within the tank (104) from falling below a second predetermined threshold (120).

7. A method as defined in claim 6, wherein closing the valve (124) to prevent the liquid within the tank (104) from falling below the second predetermined threshold (120) prevents gas from entering piping (126) intended for the liquid and venting into an external environment.

8. A method as defined in any one of the preceding claims, further comprising:
measuring a third pressure of a gas within the tank (104); and
determining the volume of the liquid based on the third pressure of the gas and the first pressure of the liquid.

9. A method as defined in any one of the preceding claims, further comprising:
receiving from a level sensor (114, 116) an indication that the liquid is at a level within the tank (104); and
determining the first pressure based on the level of the liquid within the tank (104).

10. An apparatus (123) for determining an operational state of a turbine flow meter (136) in a liquid level loop control, the apparatus (123) comprising:
a comparator (406) to determine if a first pressure output corresponding to a volume of liquid in a tank (104) is within a specified range of deviation from a second pressure output corresponding to the volume of liquid in the tank (104) to determine an operational state of the turbine flow meter (136), wherein the first pressure output being transmitted from a pressure sensor (138) in the tank (104) and wherein the second pressure output being converted from an output liquid flow rate from the turbine flow meter (136) using correlation information; and
an interface (414) to transmit a diagnostic message indicating the turbine flow meter (136) needs to be serviced based on the operational state of the turbine flow meter (136) based on the determined operational state of the turbine flow meter.

11. An apparatus (123) as defined in claim 10, wherein an output from the turbine flow meter (136) is a flow rate of a portion of the liquid out of the tank (104) and the comparator (406) is to convert the flow rate into the second pressure.

12. An apparatus (123) as defined in any one of claims 10 or 11, further comprising an actuator driver (416) to instruct an electric actuator (130) of a dump valve (124) to open a valve member (125) to release a portion of the liquid from the tank (104) when the volume of the liquid exceeds a predetermined threshold (118).

13. An apparatus (123) as defined in claims 12, wherein:
the comparator (406) is to determine a maximum opening for the valve member (125) based on the volume of the liquid in the tank (104); and
the actuator driver (416) is to instruct the electric actuator (130) to adjust a flow rate adjuster to the determined maximum opening of the valve member (125).

14. An apparatus (123) as defined in any one of claims 12 or 13, wherein the comparator (406) is to determine a length of time to open the dump valve (124) based on the volume of the liquid and a pressure of a gas in the tank (104).

15. An apparatus (123) as defined in any one of claims 12-14, wherein:
the comparator (406) is to determine a second volume of the liquid based on a third pressure output from the turbine flow meter (136) that corresponds to a third pressure; and
the actuator driver (416) is to instruct the electric actuator (130) to close the dump valve (124) to prevent the liquid within the tank (104) from falling below a second predetermined threshold (120).

16. An apparatus (123) as defined in any one of claims 10-15, wherein the tank (104) is a separator (102) to separate natural gas from liquids extracted from a borehole.

17. A tangible machine-accessible medium having instructions stored thereon that, when executed, cause a machine (406) to determine an operational state of a turbine flow meter by at least:
determine via a sensor (138) a first pressure of a liquid in a tank (104);
determine via turbine flow meter (136) a second pressure of the liquid in the tank (104) using correlation information to convert a liquid flow rate through the turbine flow meter to the second pressure;
determine if the first pressure is within a specified range of deviation from the second pressure to determine an operational state of the turbine flow meter (136); and
based on the determined operational state of the turbine flow meter, transmit a diagnostic message indicating that the turbine flow meter (136) needs to be serviced based on the state of the turbine flow meter (136).

18. A tangible machine-accessible medium as defined in claim 17, wherein the machine-accessible instructions, when executed, cause the machine (406) to: determine a volume of the liquid in the tank (104) based on the first pressure or the second pressure; and open a valve (124) to release a portion of the liquid from the tank (104) when the volume of the liquid exceeds a predetermined threshold (118).

19. A tangible machine-accessible medium as defined in claim 18, wherein the machine-accessible instructions, when executed, cause the machine (406) to determine a length of time to open the valve (124) and an amount to open the valve (124) based on the volume of the liquid in the tank (104).

20. A tangible machine-accessible medium as defined in claim 17, wherein the machine-accessible instructions, when executed, cause the machine (406) to:
determine a second volume of the liquid in the tank (104) based on the first pressure or the second pressure; and
close a valve to prevent the liquid within the tank (104) from falling below a second predetermined threshold (120) to prevent gas from entering piping (126) intended for the liquid.

## Patentansprüche

1. Verfahren zum Bestimmen eines Betriebszustandes einer
Turbinenflussmesseinrichtung in einem Regelkreis (500, 600, 700) eines Flüssigkeitspegels, wobei das Verfahren aufweist:
ein Bestimmen eines ersten Druckes einer Flüssigkeit in einem Flüssigkeitsbehälter (104) über einen Sensor (138),
ein Bestimmen eines zweiten Druckes der Flüssigkeit in dem Flüssigkeitsbehälter (14) über die Turbinenflussmesseinrichtung (136), indem eine Korrelationsinformation verwendet wird, um eine Flussrate der Flüssigkeit durch die Turbinenflussmesseinrichtung in den zweiten Druck umzuwandeln,
ein Bestimmen, ob sich der erste Druck innerhalb eines bestimmten Bereichs der Abweichung von dem zweiten Druck befindet, um einen Betriebszustand des Turbinenflussmesseinrichtung (136) zu bestimmen, und
basierend auf dem Betriebszustand der Turbinenflussmesseinrichtung (136) ein Übertragen einer Diagnosemitteilung, die anzeigt, dass die Turbinenflussmesseinrichtung (136) gewartet werden muss.

2. Verfahren nach einem der vorgehenden Ansprüche, welches ferner aufweist:
ein Bestimmen eines Volumens der Flüssigkeit in dem Flüssigkeitsbehälter (104) basierend auf dem ersten Druck oder dem zweiten Druck, und
ein Öffnen eines Ventils (124), um einen Anteil der Flüssigkeit aus dem Flüssigkeitsbehälter (104) freizugeben, wenn das Volumen der Flüssigkeit einen vorbestimmten Schwellenwert (118) überschreitet.

3. Verfahren nach Anspruch 2, wobei der Anteil der Flüssigkeit freigegeben wird, um zu verhindern, dass die Flüssigkeit aus dem Flüssigkeitsbehälter überläuft und in das Leitungssystem (140) eintritt, das für ein Gas bestimmt ist.

4. Verfahren nach einem der Ansprüche 2 oder 3, welches ferner basierend auf dem Volumen der Flüssigkeit in dem Flüssigkeitsbehälter (104) ein Bestimmen eines Betrages aufweist, um das Ventil (124) zu öffnen.

5. Verfahren nach einem der Ansprüche 2 bis 4, welches ferner basierend auf dem Volumen der Flüssigkeit in dem Flüssigkeitsbehälter (104) ein Bestimmen einer Länge der Zeit, um das Ventil (124) zu öffnen, und ein Bestimmen eines Betrages aufweist, um das Ventil (124) zu öffnen.

6. Verfahren nach einem der Ansprüche 2 bis 5, welches ferner aufweist:
ein Bestimmen eines zweiten Volumens der Flüssigkeit in dem Flüssigkeitsbehälter (104) basierend auf dem ersten Druck oder dem zweiten Druck, und
ein Schließen des Ventils (124), um verhindern, dass die Flüssigkeit in dem Flüssigkeitsbehälter (104) unter einen zweiten vorbestimmten Schwellenwert (120) fällt.

7. Verfahren nach Anspruch 6, welches das Schließen des Ventils (124) aufweist, um verhindern, dass die Flüssigkeit in dem Flüssigkeitsbehälter (104) unter einen zweiten vorbestimmten Schwellenwert fällt, um verhindern, dass das Gas in ein Leitungssystem (126) eintritt, das für die Flüssigkeit bestimmt ist, und welches ein Belüften in eine externe Umgebung aufweist.

8. Verfahren nach einem der vorgehenden Ansprüche, welches ferner aufweist:
ein Messen eines dritten Druckes des Gases in dem Flüssigkeitsbehälter (104), und
ein Bestimmen des Volumens der Flüssigkeit in dem Flüssigkeitsbehälter (104) basierend auf dem dritten Druck des Gases und dem ersten Druck der Flüssigkeit.

9. Verfahren nach einem der vorgehenden Ansprüche, welches ferner aufweist:
ein Empfangen einer Anzeige von einem Pegelsensor (114, 116), dass sich die Flüssigkeit auf einem Pegel in dem Flüssigkeitsbehälter (104) befindet, und
basierend auf dem Pegel ein Bestimmen des ersten Druckes der Flüssigkeit in dem Flüssigkeitsbehälter (104).

10. Vorrichtung (123) zum Bestimmen eines Betriebszustandes einer Turbinenflussmesseinrichtung in einem Regelkreis (500, 600, 700) eines Flüssigkeitspegels, wobei die Vorrichtung aufweist:
eine Vergleichseinrichtung (406), um zu bestimmen, ob eine erste Druckausgabe, die einem Volumen der Flüssigkeit in einem Flüssigkeitsbehälter (104) entspricht, sich innerhalb eines bestimmten Bereiches einer Abweichung von einer zweiten Druckausgabe befindet, die dem Volumen der Flüssigkeit in einem Flüssigkeitsbehälter (104) entspricht, um den Betriebszustand der Turbinenflussmesseinrichtung (136) zu bestimmen, wobei die erste Druckausgabe von einem Drucksensor (138) in dem Flüssigkeitsbehälter (104) übertragen wird und wobei die zweite Druckausgabe von einer Ausgabe einer Flussrate der Flüssigkeit durch die Turbinenflussmesseinrichtung mittels einer Korrelationsinformation umgewandelt wird, und
eine Schnittstelle (414), um basierend auf dem Betriebszustand der Turbinenflussmesseinrichtung (136) eine Diagnosemitteilung zu übertragen, die anzeigt, dass die Turbinenflussmesseinrichtung (136) gewartet werden muss.

11. Vorrichtung (123) nach Anspruch 10, wobei eine Ausgabe von der Turbinenflussmesseinrichtung (136) eine Flussrate eines Anteils der Flüssigkeit aus dem Flüssigkeitsbehälter (104) ist und wobei die Vergleichseinrichtung (406) ausgestaltet ist, die Flussrate in den zweiten Druck umzuwandeln.

12. Vorrichtung (123) nach einem der Ansprüche 10 oder 11, welche ferner einen Stellgliedtreiber (416) aufweist, um ein elektrisches Stellglied (130) eines Endladeventils (124) anzuweisen, ein Ventilglied zu öffnen, um einen Anteil der Flüssigkeit aus dem Flüssigkeitsbehälter (104) freizugeben, wenn das Volumen der Flüssigkeit einen vorbestimmten Schwellenwert (118) überschreitet.

13. Vorrichtung (123) nach Anspruch 12, wobei
die Vergleichseinrichtung (406) ausgestaltet ist, eine maximale Öffnung des Ventilglieds basierend auf dem Volumen der Flüssigkeit in dem Flüssigkeitsbehälter (104) zu bestimmen, und
der Stellgliedtreiber (416) ausgestaltet ist, das elektrische Stellglied (130) anzuweisen, die Flussrate an die maximale Öffnung des Ventilglieds (125) anzupassen.

14. Vorrichtung (123) nach einem der Ansprüche 12 oder 13, wobei die Vergleichseinrichtung (406) ausgestaltet ist, eine Länge der Zeit zu bestimmen, um das Endladeventil (124) basierend auf dem Volumen der Flüssigkeit und einen Druck eines Gases in dem Flüssigkeitsbehälter (104) zu öffnen.

15. Vorrichtung (123) nach einem der Ansprüche 12 bis 14, wobei
die Vergleichseinrichtung (406) ausgestaltet ist, basierend auf einer dritten Druckausgabe von der Turbinenflussmesseinrichtung ein zweites Volumen zu bestimmen, das einem dritten Druck entspricht, und
der Stellgliedtreiber (416) ausgestaltet ist, das elektrische Stellglied (130) anzuweisen, das Endladeventil (124) zu schließen, um zu verhindern, dass die Flüssigkeit in dem Flüssigkeitsbehälter (104) unter einen bestimmten Pegel fällt.

16. Vorrichtung (123) nach einem der Ansprüche 10 bis 15, wobei der Flüssigkeitsbehälter (104) eine Trennvorrichtung ist, um das Naturgas von den Flüssigkeiten zu trennen, die aus einem Bohrloch gefördert werden.

17. Physikalisches Medium, auf welches eine Maschine zugreifen kann und welches Anweisungen darauf gespeichert aufweist und welches, wenn darauf zugegriffen wird, bewirkt, dass die Maschine (406) einen Betriebszustand einer Turbinenflussmesseinrichtung bestimmt durch mindestens:
ein Bestimmen eines ersten Druckes einer Flüssigkeit in einem Flüssigkeitsbehälter (104) über einen Sensor (138),
ein Bestimmen eines zweiten Druckes der Flüssigkeit in dem Flüssigkeitsbehälter (14) über die Turbinenflussmesseinrichtung (136), indem eine Korrelationsinformation verwendet wird, um eine Flussrate der Flüssigkeit durch die Turbinenflussmesseinrichtung in den zweiten Druck umzuwandeln,
ein Bestimmen, ob sich der erste Druck innerhalb eines bestimmten Bereichs der Abweichung von dem zweiten Druck befindet, um einen Betriebszustand der Turbinenflussmesseinrichtung (136) zu bestimmen, und
basierend auf dem Betriebszustand der Turbinenflussmesseinrichtung (136) ein Übertragen einer Diagnosemitteilung, die anzeigt, dass die Turbinenflussmesseinrichtung (136) gewartet werden muss.

18. Physikalisches Medium, auf welches eine Maschine zugreifen kann, nach Anspruch 17, und welches, wenn darauf zugegriffen wird, bewirkt, dass die Maschine (406) ausführt:
ein Bestimmen eines Volumens der Flüssigkeit in dem Flüssigkeitsbehälter (104) basierend auf dem ersten Druck oder dem zweiten Druck, und
ein Öffnen eines Ventils (124), um einen Anteil der Flüssigkeit aus dem Flüssigkeitsbehälter (104) freizugeben, wenn das Volumen der Flüssigkeit einen vorbestimmten Schwellenwert (118) überschreitet.

19. Physikalisches Medium, auf welches eine Maschine zugreifen kann, nach Anspruch 18, und welches, wenn darauf zugegriffen wird, bewirkt, dass die Maschine (406) ausführt:
ein Bestimmen einer Länge der Zeit, um das Ventil (124) zu öffnen, und
ein Bestimmen eines Betrages, um das Ventil (124) zu öffnen, basierend auf dem Volumen der Flüssigkeit in dem Flüssigkeitsbehälter (104).

20. Physikalisches Medium, auf welches eine Maschine zugreifen kann, nach Anspruch 17, und welches, wenn darauf zugegriffen wird, bewirkt, dass die Maschine (406) ausführt:
ein Bestimmen eines zweiten Volumens der Flüssigkeit in dem Flüssigkeitsbehälter (104) basierend auf dem ersten Druck oder dem zweiten Druck, und
ein Schließen des Ventils (124), um verhindern, dass die Flüssigkeit in dem Flüssigkeitsbehälter (104) unter einen zweiten vorbestimmten Schwellenwert fällt, um zu verhindern, dass das Gas in ein Leitungssystem (126) eintritt, das für die Flüssigkeit bestimmt ist.

## Revendications

1. Procédé pour déterminer un état opérationnel d'un débitmètre à turbine dans une commande en boucle de niveau de liquide (500, 600, 700), comprenant :
déterminer via un capteur (138) une première pression d'un liquide dans un réservoir (104) ;
déterminer via le débitmètre à turbine (136) une deuxième pression du liquide dans le réservoir (104) en utilisant des informations de corrélation pour convertir un débit de liquide à travers le débitmètre à turbine en la deuxième pression ;
déterminer si la première pression est dans un intervalle de déviation spécifié par rapport à la deuxième pression pour déterminer un état opérationnel du débitmètre à turbine (136) ; et
sur la base de l'état opérationnel du débitmètre à turbine, transmettre un message de diagnostic indiquant qu'un entretien du débitmètre à turbine (136) est nécessaire sur la base de l'état du débitmètre à turbine (136) .

2. Procédé tel que défini dans l'une quelconque des revendications précédentes, comprenant en outre :
déterminer un volume du liquide dans le réservoir (104) sur la base de la première pression ou de la deuxième pression ; et
ouvrir une vanne (124) pour libérer une partie du liquide du réservoir (104) lorsque le volume du liquide dépasse un seuil prédéterminé (118).

3. Procédé tel que défini dans la revendication 2, dans lequel la partie du liquide est libérée pour empêcher le liquide de déborder du réservoir (104) et de pénétrer dans une tuyauterie (140) prévue pour un gaz.

4. Procédé tel que défini dans l'une quelconque des revendications 2 ou 3, comprenant en outre la détermination d'une quantité d'ouverture de la vanne (124) sur la base du volume de liquide dans le réservoir (104).

5. Procédé tel que défini dans l'une quelconque des revendications 2 à 4, comprenant en outre la détermination d'une durée d'ouverture de la vanne (124) et une quantité d'ouverture de la vanne (124) sur la base du volume de liquide dans le réservoir (104).

6. Procédé tel que défini dans l'une quelconque des revendications 2 à 5, comprenant en outre :
déterminer un second volume du liquide sur la base de la première pression ou de la deuxième pression ; et
fermer la vanne (124) pour empêcher le liquide à l'intérieur du réservoir (104) de chuter sous un second seuil prédéterminé (120).

7. Procédé tel que défini dans la revendication 6, dans lequel la fermeture de la vanne (124) pour empêcher le liquide à l'intérieur du réservoir (104) de chuter sous le second seuil prédéterminé (120) empêche du gaz de pénétrer dans la tuyauterie (126) destinée au liquide et de se décharger dans un environnement externe.

8. Procédé tel que défini dans l'une quelconque des revendications précédentes, comprenant en outre :
mesurer une troisième pression d'un gaz à l'intérieur du réservoir (104) ; et
déterminer le volume du liquide sur la base de la troisième pression du gaz et de la première pression du liquide.

9. Procédé tel que défini dans l'une quelconque des revendications précédentes, comprenant en outre :
recevoir d'un capteur de niveau (114, 116) une indication que le liquide est à un niveau à l'intérieur du réservoir (104) ; et
déterminer la première pression sur la base du niveau du liquide à l'intérieur du réservoir (104).

10. Appareil (123) pour déterminer un état opérationnel d'un débitmètre à turbine (136) dans une commande en boucle de niveau de liquide, l'appareil (123) comprenant :
un comparateur (406) pour déterminer si une première sortie de pression correspondant à un volume de liquide dans un réservoir (104) est dans un intervalle de déviation spécifié par rapport à une deuxième sortie de pression correspondant au volume de liquide dans le réservoir (104) pour déterminer un état opérationnel du débitmètre à turbine (136), dans lequel la première sortie de pression est transmise à partir d'un capteur de pression (138) dans le réservoir (104) et dans lequel la deuxième sortie de pression est convertie à partir d'un débit de liquide de sortie provenant du débitmètre à turbine (136) en utilisant des informations de corrélation ; et
une interface (414) pour transmettre un message de diagnostic indiquant qu'un entretien du débitmètre à turbine (136) est nécessaire sur la base de l'état opérationnel du débitmètre à turbine (136) basé sur l'état opérationnel déterminé du débitmètre à turbine.

11. Appareil (123) tel que défini dans la revendication 10, dans lequel une sortie du débitmètre à turbine (136) est un débit d'une partie du liquide à l'extérieur du réservoir (104) et le comparateur (406) est destiné à convertir le débit en la deuxième pression.

12. Appareil (123) tel que défini dans l'une quelconque des revendications 10 ou 11, comprenant en outre un pilote d'actionneur (416) pour ordonner à un actionneur électrique (130) d'une vanne de décharge (124) d'ouvrir un organe de vanne (125) pour libérer une partie du liquide à partir du réservoir (104) lorsque le volume du liquide dépasse un seuil prédéterminé (118).

13. Appareil (123) tel que défini dans la revendication 12, dans lequel :
le comparateur (406) est destiné à déterminer une ouverture maximale pour l'organe de vanne (125) sur la base du volume du liquide dans le réservoir (104) ; et
l'entraînement d'actionneur (416) est destiné à ordonner à l'actionneur électrique (130) de régler un régulateur de débit à l'ouverture maximale déterminée de l'organe de vanne (125).

14. Appareil (123) tel que défini dans l'une quelconque des revendications 12 ou 13, dans lequel le comparateur (406) est destiné à déterminer une longueur de temps d'ouverture de la vanne de décharge (124) sur la base du volume du liquide et d'une pression d'un gaz dans le réservoir (104).

15. Appareil (123) tel que défini dans l'une quelconque des revendications 12 à 14, dans lequel :
le comparateur (406) est destiné à déterminer un second volume du liquide sur la base d'une troisième sortie de pression provenant du débitmètre à turbine (136) qui correspond à une troisième pression ; et
l'entraînement d'actionneur (416) est destiné à ordonner à l'actionneur électrique (130) de fermer la vanne de décharge (124) pour empêcher le liquide à l'intérieur du réservoir (104) de chuter sous un second seuil prédéterminé (120).

16. Appareil (123) tel que défini dans l'une quelconque des revendications 10 à 15, dans lequel le réservoir (104) est un séparateur (102) pour séparer du gaz naturel de liquides extraits d'un trou de forage.

17. Support tangible accessible par une machine ayant des instructions stockées sur celui-ci qui, lorsqu'elles sont exécutées, amènent une machine (406) à déterminer un état opérationnel d'un débitmètre à turbine par au moins :
déterminer via un capteur (138) une première pression d'un liquide dans un réservoir (104) ;
déterminer via un débitmètre à turbine (136) une deuxième pression du liquide dans le réservoir (104) en utilisant des informations de corrélation pour convertir un débit de liquide à travers le débitmètre à turbine à la deuxième pression ;
déterminer si la première pression est dans un intervalle de déviation spécifié par rapport à la deuxième pression pour déterminer un état opérationnel du débitmètre à turbine (136) ; et
sur la base de l'état opérationnel déterminé du débitmètre à turbine, transmettre un message de diagnostic indiquant qu'un entretien du débitmètre à turbine (136) est nécessaire sur la base de l'état du débitmètre à turbine (136).

18. Support tangible accessible par une machine tel que défini dans la revendication 17, dans lequel les instructions accessibles par une machine, lorsqu'elles sont exécutées, amènent la machine (406) à : déterminer un volume du liquide dans le réservoir (104) sur la base de la première pression ou de la deuxième pression ; et ouvrir une vanne (124) pour libérer une partie du liquide du réservoir (104) lorsque le volume du liquide dépasse un seuil prédéterminé (118).

19. Support tangible accessible par une machine tel que défini dans la revendication 18, dans lequel les instructions accessibles par une machine, lorsqu'elles sont exécutées, amènent la machine (406) à déterminer une longueur de temps d'ouverture de la vanne (124) et une quantité d'ouverture de la vanne (124) sur la base du volume du liquide dans le réservoir (104).

20. Support tangible accessible par une machine tel que défini dans la revendication 17, dans lequel les instructions accessibles par une machine, lorsqu'elles sont exécutées, amènent la machine (406) à :
déterminer un second volume du liquide dans le réservoir (104) sur la base de la première pression ou de la deuxième pression ; et
fermer une vanne pour empêcher le liquide à l'intérieur du réservoir (104) de chuter sous un second seuil prédéterminé (120) pour empêcher du gaz de pénétrer dans une tuyauterie (126) prévue pour le liquide.
